# EUROPEAN PATENT APPLICATION

(11) **EP 2 077 629 A1**
(43) Date of publication of application: **08.07.2009**
(21) Application number: 07806406.0
(22) Date of filing: 30.08.2007
(51) Int. Cl.: H04B 7/26, H04L 12/56, H04Q 7/36

(54) **WIRELESS COMMUNICATION DEVICE AND WIRELESS COMMUNICATION METHOD**

(30) Priority: 27.10.2006 JP 2006292101
(71) Applicant: Panasonic Corporation, Kadoma-shi Osaka 571-8501 (JP)
(72) Inventor: HORIUCHI, Ayako c/o Panasonic Corporation, IPROC, Chuo-ku, Osaka 540-6207 (JP); MIYOSHI, Kenichi c/o Panasonic Corporation, IPROC, Chuo-ku, Osaka 540-6207 (JP)
(74) Representative: Grünecker, Kinkeldey, Stockmair & Schwanhäusser Anwaltssozietät
(86) International application number: PCT/JP2007/066929
(87) International publication number: WO 2008/050539

(57) **Abstract**

The present invention has an object to provide a wireless communication apparatus and a wireless communication method, which are capable of performing overall optimum channel allocation without producing a control delay with respect to a variation of channel qualities between a mobile station and a relay station.

Before a frame 2, allocation information for the frame 2 is transmitted from the relay station to a mobile station. As being allocated based upon the allocation information of the frame 2, a packet "MS(2)" is transmitted to the relay station via a channel "CH1" of the frame 2.

At the same time, a packet "RS[MS(1)]" is transmitted from the relay station to the base station via a channel "CH2" of the frame 2. A quality of a channel "CH1" of a frame 2 between the mobile station and the relay station has been deteriorated . At this time, the relay station notifies the quality deterioration to the mobile station. The mobile station which has received the notification of the quality deterioration changes the allocated channel "CH1" into another channel "CH2" which has been allocated between the relay station and the base station. The relay station also changes the channel "CH2" which has been allocated between the relay station and the base station into the channel "CH1" which has been allocated between the base station and the base station.

## Description

### Technical Field

The present invention is related to a wireless communication apparatus and a wireless communication method.

### Background Art

Recently, in cellular mobile communication systems which are typically known as portable telephone systems, since large amounts of information are handled as multimedia data, it is popularized that large amounts of data are transferred which contain not only voice data, but also still image data, and moving picture data. In order to realize large amounts of data transmissions, various sorts of technical ideas capable of achieving high transfer rates by utilizing wireless high-frequency bands have been actively considered.

However, in such a case that the wireless high-frequency bands are utilized, such high transfer rates may be expected in short distances, whereas the longer the transfer distance is increased, the larger the data attenuation is increased due to longer transfer distances. As a consequence, in such a case that mobile communication systems are actually operated by utilizing wireless high-frequency bands, a covering area by each of wireless communication base station apparatuses (will be abbreviated as "base stations" hereinafter) is decreased. As a result, a larger number of such base stations are required to be installed. Since installation cost is necessarily increased in order to install large numbers of these base stations, such technical ideas capable of realizing communication services by utilizing the wireless high-frequency bands, while suppressing an increase in a total number of base stations, have been strongly required.

To meet such a requirement, the below-mentioned relay/transmission technical ideas have been considered. That is, in order to expand covering areas covered by respective base stations, wireless communication relay station apparatuses (will be abbreviated as "relay stations" hereinafter) are installed between base stations and wireless communication mobile station apparatuses (will be abbreviated as "mobile stations" hereinafter); and then, communications between the base stations and the mobile stations are carried out via relay stations. In the above-described relay/transmission technical ideas, allocation numbers of channels are increased, as compared with those of such a communication system realized by employing only a base station and mobile stations, so that these relay/transmission technical ideas become complex.

As channel allocation technical ideas capable of solving the above-described complex problem, techniques (refer to, for instance, non-patent publication 1) for performing concentrated controls have been proposed. In the conventional technique disclosed in the non-patent

Non-patent publication 1: RCS2004-341 "A study of channel-allocation in Pico-cell system."

### Disclosure of the Invention

### Problems that the Invention is to Solve

However, in the conventional concentrated control system described in the above-described non-patent publication 1, the same channels have been used until the channel-allocation is issued from the base station. If a line quality as to the channel between the mobile station and the relay station is lowered, then a pilot signal is transmitted to another channel so as to measure a quality thereof.

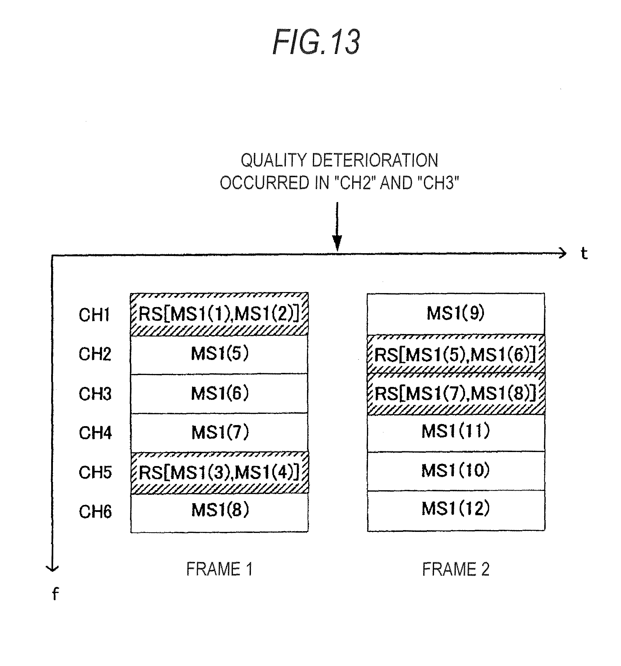

Fig. 13 is a diagram for explaining a line quality measuring method of the conventional system. In the conventional system, when a quality of a channel "CH1" is deteriorated in a frame 1, which has been allocated between a mobile station "MS1" and a relay station "RS", the mobile station "MS1" transmits pilot signals to other channels "CH2", "CH3", and "CH4" in a frame 2 so as to measure line qualities of these channels.

However, if one mobile station transmits a large number of pilot signals, although a line quality in such a case that this mobile station uses another channel can be measured, the channels are occupied by one mobile station, and other mobile stations cannot transmit pilot signals. Accordingly, line qualities in such a case that other mobile stations use other channels cannot be measured.

The present invention has been made to solve the above-described problem of the conventional technique, and therefore, has an object to provide a wireless communication apparatus and a wireless communication method, which can measure line qualities as to a plurality of channels in a high efficiency without giving an adverse influence to communications made by other mobile stations in such a case that a mobile station is communicated with a base station via a relay station.

### Means for Solving the Problems

A wireless communication apparatus, according to the present invention, is such a wireless communication apparatus for relaying a communication between a mobile station and a base station in accordance with a predetermined channel-allocation rule, comprising: a function for alternately using a channel which has been allocated between the mobile station and the own wireless communication apparatus, and another channel which has been allocated between the base station and the own wireless communication apparatus in accordance with a rule which is commonly used between the mobile station and the wireless communication apparatus.

In accordance with the above-described arrangement, when the data is transmitted, since the channel allocated between the mobile station and the relay station, and also, the channel allocated between the relay station and the base station are alternately used, the qualities of the lines to be used can be continuously measured. As a result, the line qualities of the plural channels can be measured in a high efficiency. Also, in the conventional technique, when the channel station "RS" in the frame 3 has been deteriorated. In this case, the relay station "RS" notifies the quality deterioration to the base station "BS" in the frame 4. The base station "BS" which has received the notification of the quality deterioration performs rescheduling of channel allocation so as to transmit new allocation information with respect to a frame 6 to the relay station "RS."

In a frame 5, since new allocation information has not yet been delivered to the mobile station "MS", the mobile station "MS" transmits a packet "MS(5)" via the channel "CH1" to the relay station "RS", and the relay station "RS" transmits a packet "RS[MS(4)]" to the base station "BS." After the frame 5, allocation information of the frame 6 is transmitted from the relay station "RS" the mobile station "MS."

In the frame 6, the mobile station "MS" transmits a packet "MS(6)" via the channel "CH3" to the relay channel "RS" in accordance with the new channel allocation rescheduled by the base station "BS", and the relay station "RS" transmits a packet "RS[MS(5)]" via the channel "CH4" to the base station "BS." Both the mobile station "MS" and the relay station "RS" continuously use the changed "CH" until new allocation is issued.

As previously described, in the conventional channel changing method, the relay station "RS" notifies the quality deterioration to the base station "BS", and then, the base station "BS" performs rescheduling of the channel allocation, so that a lengthy time is necessarily required until the rescheduled channel allocation is newly signaled from the base station "BS." As a consequence, in such a case that a quality deterioration of a channel between the mobile station "MS" and the relay station "RS" has occurred, there is a problem that the mobile station "MS" must continuously use the channel whose quality has been deteriorated within a time period during which the control delay has been produced until the new allocation information is notified.

The present invention has been made to solve the above-described problem of the conventional technique, and therefore, has an object to provide a wireless communication apparatus and a wireless communication method, which can be properly operated without producing a control delay with respect to a variation of channel qualities between a mobile station and a relay station, and furthermore, can perform optimum channel allocation of overall communication channels in such a case that the mobile station is communicated with a base station via the relay station.

### Means for Solving the problems

A wireless communication apparatus, according to the present invention, is such a wireless communication apparatus for relaying a communication between a mobile station and a base station in accordance with a predetermined channel allocation rule, including: a function for judging that a quality of a channel used between the mobile station and the wireless communication apparatus has been deteriorated; and a function for notifying the deterioration of the quality of the channel to the mobile station, and for executing trade of a channel which has been allocated between the base station and the wireless communication apparatus with the channel which has been allocated between the mobile station and the wireless communication apparatus.

In accordance with the above-described arrangement, when the channel quality between the mobile station and the wireless communication apparatus has been just deteriorated, the quality deterioration is transferred to the mobile station in real time, and such a channel which is used in the communication between the mobile station and the wireless communication apparatus can be changed from the channel whose quality has been deteriorated into another channel without any control delay. As a consequence, the wireless communication apparatus can be properly operated without any control delay with respect to the variation in the channel qualities between the mobile station and the wireless communication apparatus. Also, the wireless communication apparatus can trade the channel allocated between the base station and the wireless communication apparatus with the channel allocated between the mobile station and the wireless communication apparatus, while obeying the channel allocation scheduled by the base station, so that the overall optimum channel allocation can be maintained.

Also, the wireless communication apparatus of the present invention includes: a channel allocation information extracting unit for extracting channel allocation information transmitted from the base station; a quality deterioration judging unit for judging a quality deterioration of a signal received from the mobile station; a channel-trade instructing unit for outputting, when receiving a notification that the signal has been deteriorated from the quality deterioration judging unit, channel-trade instruction information of an instruction for trading the channel which is used in a communication between the mobile station and the wireless communication apparatus with the channel which is used in a communication between the base station and the wireless communication apparatus; and a channel allocating unit for allocating the channels in accordance with the channel-trade instruction information.

Also, in the wireless communication apparatus of the present invention, if the channel allocation information inputted from the channel allocation information extracting unit corresponds to the latest channel allocation information, then the channel allocating unit allocates the channels in accordance with the latest channel allocation information, whereas if the channel allocation information inputted from the channel allocation information extracting unit does not correspond to the latest channel allocation information, then the channel allocating unit allocates the channels in accordance with the channel-trade instruction information of the channel-trade instructing unit.

In accordance with the above-explained arrangement, in such a case that the channel quality between the mobile station and the wireless communication apparatus is deteriorated, the channel whose quality is low can be traded in an autonomous dispersed manner without waiting signaling operation from the base station.

Also, the wireless communication apparatus of the present invention includes: a wireless transmitting unit for transmitting a signal to the base station; a CRC detecting unit for performing a CRC detection with respect to a signal transmitted from the mobile station; an NACK producing unit for producing an NACK to be transmitted to the mobile station in such a case that a result of the CRC detection becomes NG, and for inputting the produced NACK to the wireless transmitting unit; and a channel allocating unit for allocating the channel which has been allocated between the mobile station and the wireless communication apparatus to a channel between the base station and the wireless communication apparatus in such a case that the result of the CRC detection becomes NG.

In accordance with the above-described arrangement, the quality deterioration is notified by sending the NACK, so that such a new signal for notifying the quality deterioration is no longer transmitted. Also, since the mobile station can transmit the resend packet by utilizing the channel which is different from the channel used in the first packet transmission, there are two merits, namely, a frequency diversity effect can be achieved, and the more the CRC detection result becomes "NG", the more the channel "CH" whose quality has been deteriorated need not be continuously utilized.

Also, a wireless communication apparatus, according to the present invention, is such a wireless communication apparatus which communicates via a relay station with a base station in accordance with a predetermined channel allocation rule, including: a function for performing a communication with the relay station by using such a channel which has been allocated between the relay station and the base station in such a case that the wireless communication apparatus receives notification as to a quality deterioration of a channel from the relay station.

In accordance with the above-described arrangement, when the channel quality between the relay station and the wireless communication apparatus is deteriorated, such a channel which is used in the communication with respect to the relay station can be changed from the channel whose quality has been deteriorated to another channel without any control delay.

Also, the wireless communication apparatus of the present invention includes: a channel allocation information extracting unit for extracting channel allocation information transmitted from the relay station; a channel trade instruction receiving unit for receiving channel-trade instruction information transmitted from the relay station; and a channel allocating unit for allocating the channels in accordance with the channel-trade instruction information.

In accordance with the above-explained arrangement, in such a case that the channel quality between the relay station and the wireless communication apparatus is deteriorated, the channel whose quality is low can be traded in an autonomous dispersed manner without waiting signaling operation from the base station.

Also, in the wireless communication apparatus of the present invention, if the channel allocation information inputted from the channel allocation information extracting unit corresponds to the latest channel allocation information, then the channel allocating unit allocates the channels in accordance with the latest channel allocation information, whereas if the channel allocation information inputted from the channel allocation information extracting unit does not correspond to the latest channel allocation information, then the channel allocating unit allocates the channels in accordance with the channel-trade instruction information received by the channel trade instruction receiving unit.

In accordance with the above-explained arrangement, since the channel which is used between the relay station and the wireless communication apparatus is traded with the channel which is used between the relay station and the base station, the base station can schedule the channels by considering the overall optimum channel allocation without being adversely influenced by the variation of the channel quality between the mobile station and the relay station.

Also, the wireless communication apparatus of the present invention includes: a function for transmitting a resend packet to the relay station by using the channel which has been allocated between the relay station and the base station in such a case that an NACK is received from the relay station.

Also, the wireless communication apparatus of the present invention includes: a channel allocation information extracting unit for extracting channel allocation information transmitted from the relay station; a coding unit for coding transmission data; an NACK receiving unit for receiving an NACK transmitted from the relay station; a buffer unit for storing thereinto the transmission data, and for outputting the transmission data stored thereinto to the coding unit in such a case that such a notification that the NACK has been received is issued from the NACK receiving unit; and a channel allocating unit operated in such a manner that if the notification of the NACK is not issued from the NACK receiving unit, then the channel allocating unit allocates the channels in accordance with the channel allocation information; when the notification of the NACK is issued from the NACK receiving unit, if the channel allocation information corresponds to the latest channel allocation information, then the channel allocating unit allocates the channels in accordance with the channel allocation information; whereas if the channel allocation information does not correspond to the latest channel allocation information, then the channel allocating unit allocates the channel which has been allocated between the relay station and the base station to such a channel between the relay station and the wireless communication apparatus.

Also, in the wireless communication apparatus of the present invention, in such a case that a plurality of packets are transmitted via a plurality of channels contained in one frame, when the wireless communication apparatus receives notification as to such a channel whose quality has been deteriorated from the relay station, the wireless communication apparatus changes channel allocation in such a manner that the wireless communication apparatus ceases to use such a notified channel whose quality has been deteriorated among the channels which have been allocated between the relay station and the wireless communication apparatus, and then uses such a channel which has been allocated between the relay station and the base station.

In accordance with the present invention, in such a case that a packet is subdivided and the subdivided packets are transmitted, if information for specifying a channel having a low quality has been added as an NACK transmitted from a relay station which has received the subdivided packet, then the channel whose quality is low can be traded between the relation station and the wireless communication apparatus.

Also, in the wireless communication apparatus of the present invention, a packet which is scheduled to be sent via a channel whose channel number is small among a plurality of designated channels is transmitted via a channel whose channel number is small among a plurality of channels which have been allocated between the relay station and the base station.

Also, a wireless communication apparatus, according to the present invention, is such a wireless communication apparatus which communicates via a relay station with a base station in accordance with a predetermined channel allocation rule, including: a function that, when another wireless communication apparatus senses that notification as to a deterioration of a channel quality has been received from the relay station, is communicated with the relay station via a channel which has been allocated between the another wireless communication apparatus and the relay station in addition to another channel which has been allocated between the wireless communication apparatus and the relay station.

Also, the wireless communication apparatus of the present invention includes: a channel allocation information extracting unit for extracting channel allocation information transmitted from the relay station; an NACK receiving unit for receiving an NACK transmitted from the relay station; and a transmission judging unit operated in such a manner that when the received NACK is directed to another wireless communication apparatus, the transmission judging unit judges that the wireless communication apparatus corresponds to such a wireless communication which is using the closest channel with respect to a channel which is scheduled to relay a signal from the another wireless communication apparatus based upon the channel allocation information; and wherein: transmission data is transmitted to the channel which is scheduled to relay the signal from the another wireless communication apparatus.

Also, in the wireless communication apparatus of the present invention, in the case that there are plural sets of wireless communication apparatuses which are using the closest channel with respect to the channel which is scheduled to relay the signal from the another wireless communication apparatus, the transmission data is transmitted via the channel which is scheduled to relay the signal from the another wireless communication apparatus in accordance with a priority order which is commonly utilized among the plurality of wireless communication apparatuses.

Also, the wireless communication apparatus of the present invention is featured by that the priority order is determined based upon QoS of a packet transmitted in a preceding frame.

Further, in the wireless communication system, according to the present invention, when the above-described mobile station divides a packet to be transmitted within one frame, and then transmits the sub-divided packets via a plurality of channels, the above-explained relay station returns such an NACK to which information for specifying a channel whose quality is low has been added.

In accordance with the above-described arrangement, for instance, in such a case that the mobile station divides the packet and transmits the divided packets, since the information for specifying the channel whose quality is low is added as the NACK, the channel whose quality is low can be traded between the mobile station and the relay station.

Also, in the wireless communication system of the present invention, a pilot signal for measuring a line quality of another mobile station is transmitted via the above-described second channel in the second frame.

In accordance with the above-described arrangement, since the line quality of the mobile station which does not transmit in the second channel can be measured, such a mobile station whose line quality is high in the second channel can be easily found out.

Also, a wireless communication system, according to the present invention is such a wireless communication system in which transmitting operations and receiving operations are mutually carried out in a synchronous manner between a mobile station and a relay station and between the relay station and a base station, while a plurality of frames having a predetermined time length are defined as a unit; the base station performs scheduling of a plurality of channels within the frame; and both the mobile station and the relay station perform transmitting operations and receiving operations in accordance with the channel scheduling information notified from the base station; wherein: in such a case that a plurality of packets are transmitted via a plurality of channels contained in one frame, when the wireless communication apparatus receives notification as to such a channel whose quality has been deteriorated from the relay station, the wireless communication apparatus changes channel allocation in such a manner that the wireless communication apparatus ceases to use such a notified channel whose quality has been deteriorated among the channels which have been allocated between the relay station and the wireless communication apparatus, and then uses such a channel which has been allocated between the relay station and the base station.

In accordance with the above-described arrangement, when a plurality of channels have been allocated to one frame, only such a channel whose quality has been deteriorated can be changed.

Also, in the wireless communication system, the above-described mobile station transmits a packet which is scheduled to sent via a channel whose channel number is small among a plurality of designated channels via a channel whose channel number is small among a plurality of channels which have been allocated between the relay station and the base station.

Also, in the wireless communication system of the present invention, in such a case that a total number of channels whose quality deteriorations have been notified is different from a total number of channels which have been allocated between the relay station and the base station, the mobile station selects such a channel whose distance separated from the channels which qualities have been deteriorated is long from the channels allocated between the relay station and the mobile station, and then, allocates a packet to the selected channel.

In accordance with the above-described arrangement, since the mobile station can use the channel which is separated from the channel whose quality has been deteriorated, it can be expected that the line quality is increased.

Also, in the wireless communication system of the present invention, in such a case that a first mobile station receives an NACK from the relay station and a second mobile station receives an ACK from the relay station, such a pilot signal for predicting a channel allocated between a third mobile station and the relay station is transmitted by using a channel which is scheduled to become empty by changing the above-described channel allocation.

In accordance with the above-described arrangement, while the same role as "signal indicative of quality deterioration" is given to the NACK, the channel whose quality has been deteriorated can be traded without any control delay. Also, since the pilot signal of another mobile station can be transmitted by utilizing the channel which is scheduled to become empty, the quality of another channel can be grasped and it is possible to measure whether or not the channel can be allocated to another mobile station in a high efficiency. A result of this measurement may be usefully utilized when the base station performs scheduling of channels in the next time.

Further, a wireless communication method, according to the present invention, is such a wireless communication method in which transmitting operations and receiving operations are mutually carried out in a synchronous manner between a mobile station and a relay station and between the relay station and a base station, while a plurality of frames having a predetermined time length are defined as a unit; the base station performs scheduling of a plurality of channels within the frame; and both the mobile station and the relay station perform transmitting operations and receiving operations in accordance with the channel scheduling information notified from the base station; wherein: in a first frame, when the relay station which is communicated with the base station via a first channel senses a quality deterioration of a second channel which is used in the communication with the mobile station, the relay station notifies the quality deterioration of the second channel to the mobile station; and in a second frame, the relay station is communicated with the base station via the second channel, and the mobile station is communicated with the relay station via the first channel.

Also, in the wireless communication method of the present invention, in the second frame, if the scheduling information transmitted from the base station corresponds to the latest scheduling information, then both the relay station and the mobile station allocate channels in accordance with the received latest scheduling information.

Also, in the wireless communication method of the present invention, in the first frame, if the relay station senses the quality deterioration of the second channel, then the relay station transmits an NACK to the mobile station.

Also, in the wireless communication method of the present invention, in the second frame, the mobile station transmits a resend packet to the relay station by using the first channel.

Also, in the wireless communication method of the present invention, in the second frame, another mobile station which is different from the mobile station is communicated with the relay station via the second channel.

### Advantage of the Invention

In accordance with the present invention, in such a case that the mobile station is communicated with the base station via the relay station, the wireless communication apparatus and the wireless communication method can be properly operated without producing the control delay with respect to the variation of the channel qualities between the mobile station and the relay station, and furthermore, can perform the optimum channel allocation of the overall communication channels.

### Brief Description of the Drawings

Fig. 1 is a diagram for explaining a schematic arrangement of a wireless communication system according to an embodiment of the present invention.
Fig. 2 is a diagram for explaining a frame structure provided in the wireless communication system according to the embodiment of the present invention.
Fig. 3A is a sequence diagram in the wireless communication system according to an embodiment (1) of the present invention.
Fig. 3B is a diagram for explaining a frame structure provided in the wireless communication system according to the embodiment (1) of the present invention.
Fig.4 is a block diagram of a relay station apparatus related to the embodiment (1) of the present invention.
Fig. 5 is a block diagram of a mobile station apparatus related to the embodiment (1) of the present invention.
Fig. 6 is a diagram for explaining a frame structure provided in a wireless communication system according to an embodiment (2) of the present invention.
Fig.7 is a block diagram of a relay station apparatus according to the embodiment (2) of the present invention.
Fig. 8 is a block diagram of a mobile station apparatus according to the embodiment (2) of the present invention.
Fig. 9 is a diagram for explaining a frame structure provided in a wireless communication system according to an embodiment (2-2A) of the present invention.
Fig. 10 is a block diagram of a mobile station apparatus according to the embodiment (2) of the present invention.
Fig. 11 is a diagram for explaining a frame structure provided in a wireless communication system according to an embodiment (2-2B) of the present invention.
Fig. 12 is a diagram for explaining a frame structure provided in a wireless communication system according to an embodiment (2-3) of the present invention.
Fig. 13 is a diagram for explaining a frame structure provided in a wireless communication system according to an embodiment (3) of the present invention.
Fig. 14 is a diagram for explaining a frame structure provided in a wireless communication system according to an embodiment (3-2) of the present invention.
Fig. 15 is a diagram for explaining a frame structure provided in a wireless communication system according to an embodiment (3-3) of the present invention.

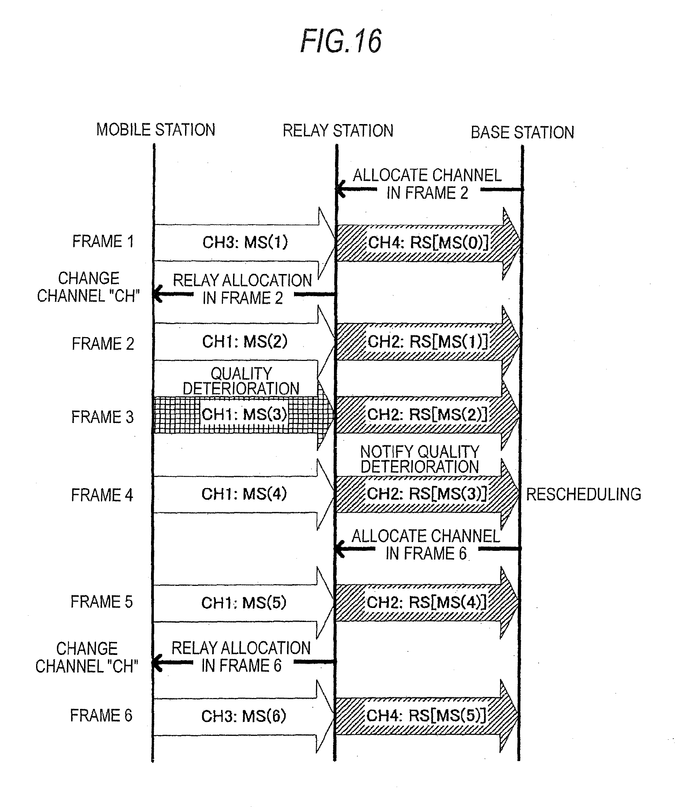

Fig. 16 is a sequence diagram for describing the channel changing method of the conventional system.

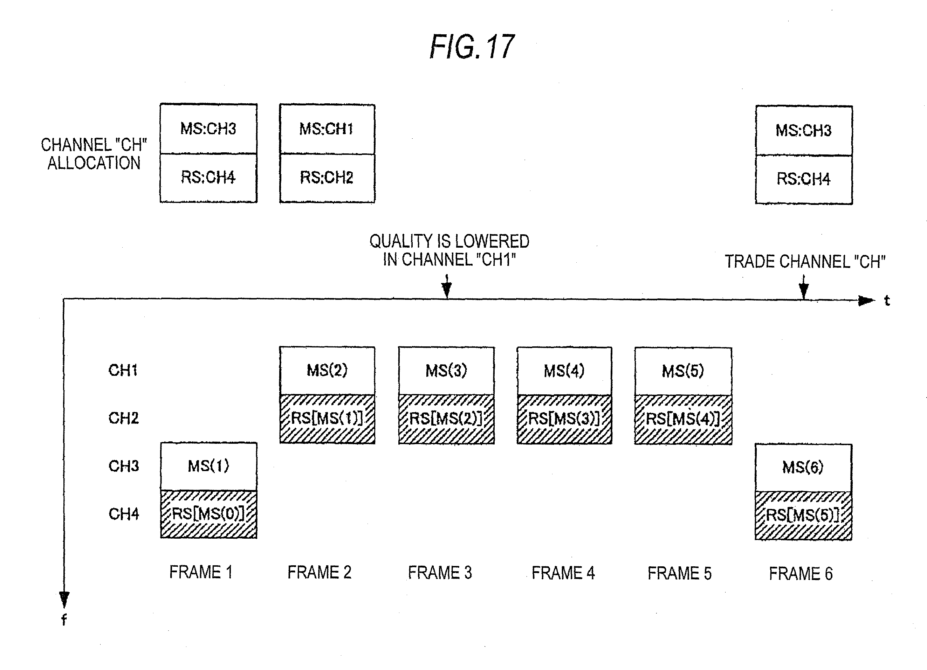

Fig. 17 is a diagram for describing the frame structure employed in the channel changing method of the conventional system.

### Description of Reference Numerals and Signs

- 100: mobile station
- 111, 221: coding unit
- 112, 222: modulating unit
- 113,212: CH allocating unit
- 114, 215: wireless transmitting unit
- 115, 217: transmission antenna
- 116, 211: CH allocation information extracting unit
- 117: CH trade instruction receiving unit
- 118,225: decoding unit
- 119,226: demodulating unit
- 120, 216: wireless receiving unit
- 121, 218: reception antenna
- 131: buffer unit
- 132: NACK receiving unit
- 141: transmission judging unit
- 200: relay station
- 223: relay control unit
- 224: CRC detecting unit
- 227: NACK producing unit
- 213: CH trade instructing unit
- 214: quality deterioration judging unit
- 300: base station

### Best Mode for Carrying Out the Invention

Referring now to accompanying drawings, a description is made of embodiments of the present invention. The below-mentioned wireless communication apparatus corresponds to such a wireless communication apparatus which relays/transmits a signal transmitted from a first wireless communication apparatus to a second wireless communication apparatus in accordance with channel allocation determined by a base station, and is designed to be mounted on, for instance, a relay station which is used in a mobile communication system. It should be understood that in the below-mentioned respective embodiments, the wireless communication apparatus which performs the relay and transmission operations will be referred to as a relay station; the first wireless communication apparatus will be referred to as a mobile station; and the second wireless communication will be referred to as a base station.

It should also be noted that the relay station described in the below-mentioned embodiments may be realized as such a relay station which has been previously installed, or may be alternatively realized by that another mobile station as employed in an ad hoc network may be utilized as the relay station.

### (EMBODIMENT 1)

In the present embodiment, when a quality of a channel is deteriorated which is being used between a mobile station and a relay station, a "CH (channel)" which has been allocated between the mobile station and the relay station is traded with another "CH" which has been allocated between the relay station and a base station, and then, the traded channel "CHs" is used. The relay station senses the deterioration of the channel quality, and then, notifies the sensed channel quality deterioration to the mobile station.

### [SYSTEM STRUCTURE]

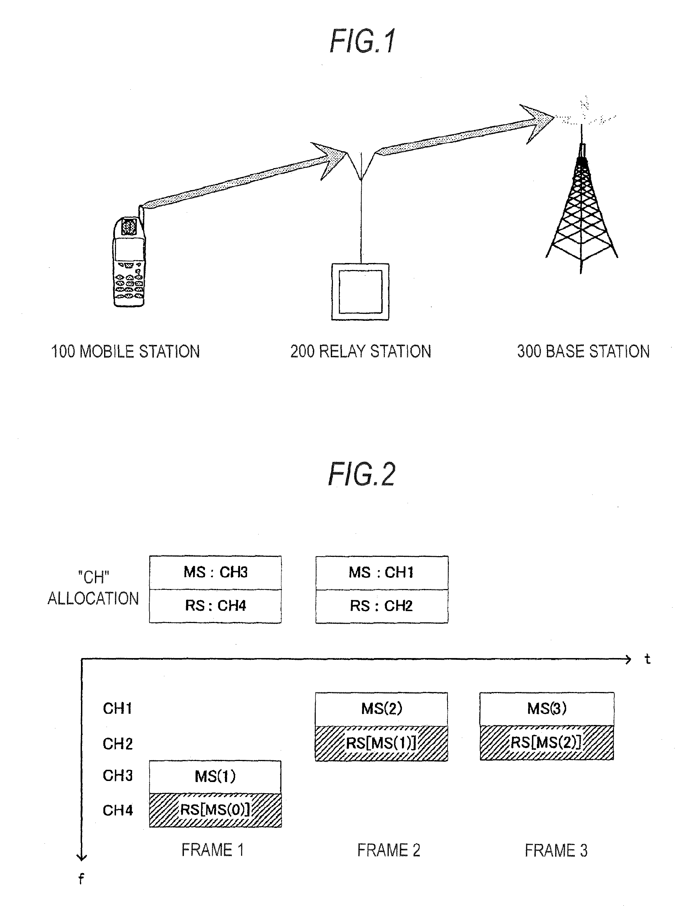

In a mobile communication system related to each of the below-mentioned embodiments, as shown in Fig. 1, a relay station (RS) 200 relays and transmits a transmission signal transmitted from a mobile station (MS) 100 to a base station (BS) 300. The mobile station 100, the relay station 200, and the base station 300 mutually perform transmitting/receiving operations in a synchronous manner, while a plurality of frames having a predetermined time length are employed as a single unit.

The base station 300 performs scheduling of channels contained in the frames. A scheduling result is transmitted from the base station 300 to the relay station 200, and then, the transmitted scheduling result is relayed from the relay station 200 to the mobile station 100. Both the mobile station 100 and the relay station 200 perform transmitting operations in accordance with the scheduling result notified from the base station 300. It should be understood that the above-described scheduling operation implies that channels (CHs) contained in the frames are allocated which are utilized between the mobile station 100 and the relay station 200, and also, between the relay station 200 and the base station 300.

A structure of the frames structure is represented in Fig. 2. In a frame 1, a mobile station "MS" transmits a packet via a channel "CH3" to a relay station, and the relay station "RS" transmits the packet to a base station via a channel "CH4." In a frame 2 and a frame 3, the mobile station "MS" transmits a packet to the relay station via a channel CH1, and the relay station "RS" transmits the packet to a base station via a channel "CH2." The reason why the channels "CHs" have been changed is given as follows: That is, the channel "CH" was newly allocated in the frame 2.

Also, a packet "MS(1)" corresponds to a first packet which is transmitted by the mobile station "MS", and a packet "RS[MS(0)]" indicates a packet "MS(0)" which is relayed by the relay station "RS." The packet "MS(1)" is transmitted from a mobile station to a relay station via the channel "CH3" in the frame 1, and is transmitted from the relay station to a base station via the channel "CH2."

### [SEQUENCE DIAGRAM]

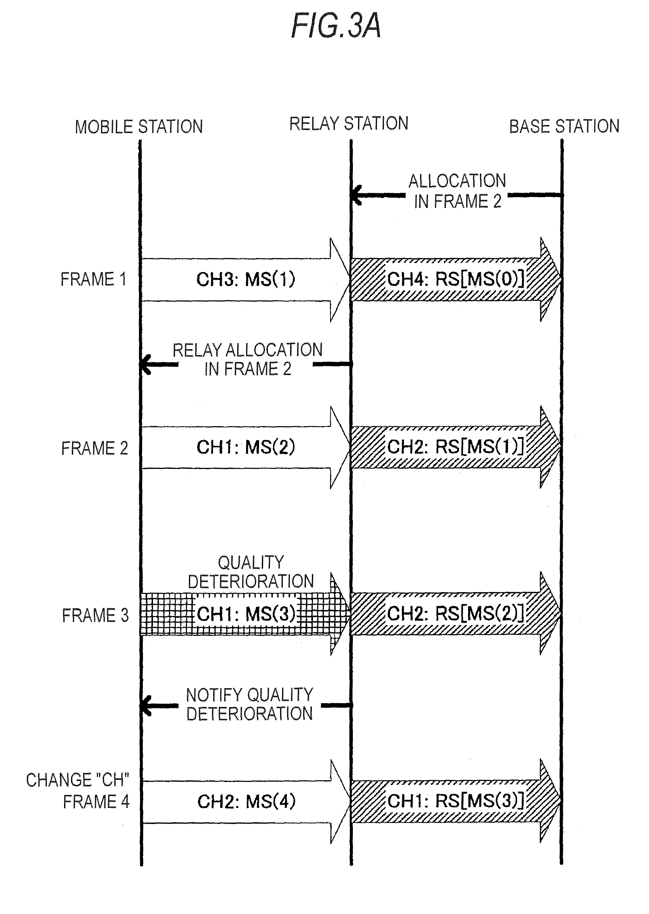

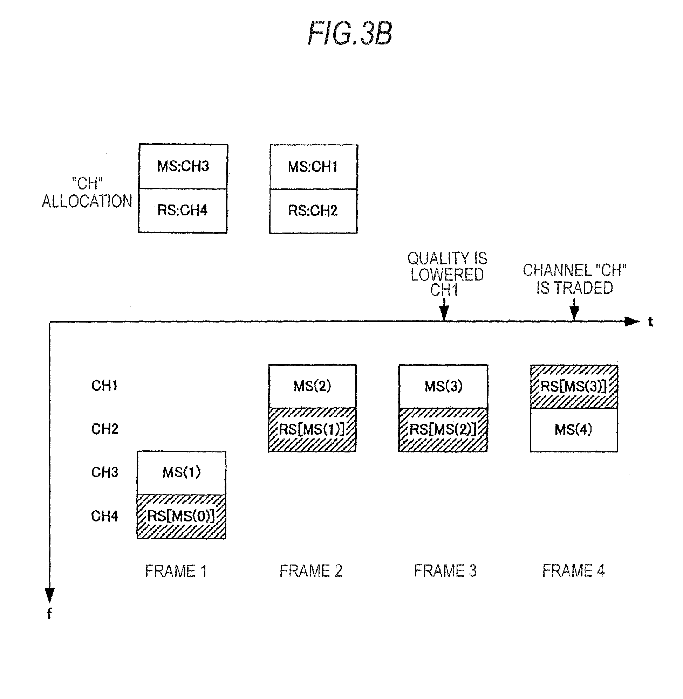

A description is made of an entire process operation of the present embodiment with reference to a sequence diagram shown in Fig. 3A and a frame structural diagram indicated in Fig. 3B. Before a frame 1, allocation information of a frame 2 is transmitted from a base station to a relay station. A packet "MS(1)" is transmitted from a mobile station to the relay station via a channel "CH3" of the frame 1. At the same time, a packet "RS[MS(0)]" is transmitted from the relay station to the base station via a channel "CH4" of the frame 1.

Before a frame 2, the allocation information for the frame 2 is transmitted from the relay station to the mobile station. A packet "MS(2)" is transmitted from the mobile station to the relay station via a channel "CH1" of the frame 2 as being allocated based upon the allocation information of the frame 2. At the same time, a packet "RS[MS(1)]" is transmitted from the relay station to the base station via a channel "CH2" of the frame 2.

In this example, a quality of the channel "CH1" of the frame 3 between the mobile station and the relay station has been deteriorated. In this case, the relay station notifies the quality deterioration to the mobile station. The mobile station which has received the notification of the quality deterioration changes the channel from the channel "CH1" allocated thereto to the channel "CH2" allocated between the relay station and the base station.

Also, the relay station changes the channel from channel "CH2" allocated between the relay station and the base station to the channel "CH1" allocated between the mobile station and the base station in order not to interfere. Both the mobile station and the relay station continuously use the changed channel "CH" until new channel allocation is made.

Since the relay station also transmits a signal for notifying the quality deterioration to the base station, the relay station can cause the base station to grasp the quality deterioration. When the base station receives the signal for notifying the quality deterioration, the base station newly performs scheduling of the channels. Also, while the relay station does not transmit the signal for notifying the quality to the base station, the relay station adds a flag for indicating that the signal is the signal transmitted from the relay station to a header of a signal which is transmitted by trading the channels "CHs", so that the relay station can cause the base station to grasp the quality deterioration. When the bass station can grasp that the channel "CH" has been changed, the base station can grasp that the quality of the channel "CH" allocated between the mobile station and the relay station has been deteriorated.

### [BLOCK DIAGRAM (1) OF RELAY STATION APPARATUS]

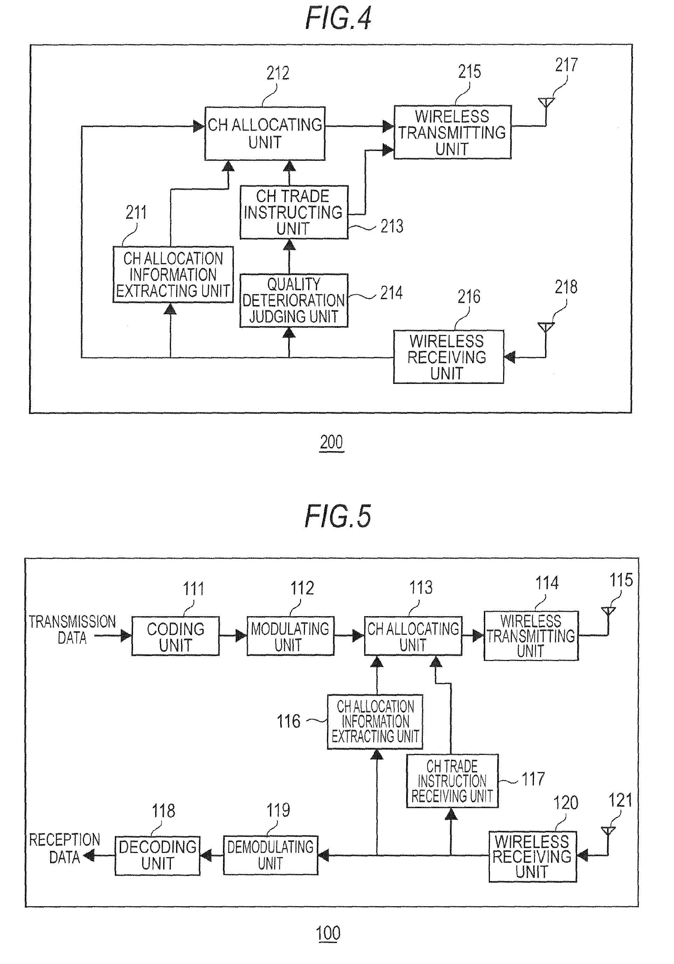

Fig. 4 is a block diagram for indicating an arrangement of the relay station apparatus 200 related to the present embodiment. In the relay station 200, a wireless receiving unit 216 receives a signal transmitted from either the mobile station 100 or the base station 300, and allocation information transmitted from the base station 300 via antenna 218, and also, performs a wireless processing operation such as a down converting operation with respect to the received signal and allocation information, and then, outputs the wireless-processed signal and allocation information.

A CH (channel) allocation information extracting unit 211 extracts the channel allocation information transmitted from the base station 300 from the output of the wireless receiving unit 216. A quality deterioration judging unit 214 judges a deterioration of a quality as to the signal received from the mobile station 100. The judgment result is inputted to a CH trade instructing unit 213.

When the CH trade instructing unit 213 receives such a notification that the signal quality has been deteriorated from the quality deterioration judging unit 214, the CH trade instructing unit 213 issues such an instruction (CH trade instructing information) that the channel "CH" between the mobile station 100 and the relay station 200 is traded with the channel "CH" between the relay station 200 and the base station 300.

In a CH (channel) allocating unit 212, if CH allocation information entered from the CH allocation information extracting unit 211 corresponds to the latest CH allocation information, then the CH allocating unit 212 obeys this latest CH allocation information, whereas if CH allocation entered from the CH allocation information extracting unit 211 does not correspond to the latest CH allocation information, then the CH allocating unit 212 obeys an instruction issued from the CH trade instructing unit 213.
When the CH trade instructing unit 213 instructs trade of the CH, the CH allocating unit 212 allocates the channel "CH" which has been allocated between the mobile station 100 and the relay station 200 to such a channel between the relay station 200 and the base station 300. When the CH trade instructing unit 213 does not instruct the trade of the channel "CH", the CH allocating unit 212 directly allocates the channel "CH" between the relay station 200 and the base station 300 without trading the channel "CH."

The signal allocated to the channel "CH" is inputted to a wireless transmitting unit 215. The wireless transmitting unit 215 performs a wireless processing operation such as an up converting operation with respect to the entered relay signal, and then, transmits the wireless-processed relay signal from an antenna 217 to the base station 300. Also, the wireless transmitting unit 215 transmits the CH trade instruction information derived from the CH trade instructing unit 213 from the antenna 217 to the mobile station 100.

### [BLOCK DIAGRAM (1) OF MOBILE STATION APPARATUS]

Fig. 5 is a block diagram of the mobile station 100. A description as to commonly used structural elements of Fig. 4 will be omitted in Fig. 5. A CH trade instruction receiving unit 117 receives CH (channel) trade instruction information transmitted from the relay station 200. In a demodulating unit 119, the signal is demodulated, and in a decoding unit 118, the signal is decoded to constitute reception data. The transmission data is coded by a coding unit 111, and the coded transmission data is modulated in a modulating unit 112. The modulated signal is entered to a CH (channel) allocating unit 113.

In the CH allocating unit 113, if CH allocation information inputted from a CH (channel) allocation information extracting unit 116 corresponds to the latest CH allocation information, then the CH allocating unit 113 obeys this latest CH allocation information, whereas if CH allocation information inputted from the CH allocation information extracting unit 116 does not correspond to the latest CH allocation information, then the CH allocating unit 113 obeys the CH trade instruction information received by the CH trade instruction receiving unit 117. When the CH trade is instructed to the CH allocating unit 113, the CH allocating unit 113 allocates the channel "CH" which has been allocated between the relay station 200 and the base station 300 to such a channel between the mobile station 100 and the relay station 200. When the CH trade is not instructed to the CH allocating unit 113, the CH allocating unit 113 directly allocates the channel "CH" between the mobile station 100 and the relay station 200 without trading the channel "CH."

As previously described, in accordance with the wireless communication apparatus, the wireless communication system, and the wireless communication method, related to the present embodiment, in such a case that a channel quality between the mobile station and the relay station is deteriorated, the channel which is used between the mobile station and the relay station is traded with the channel which is used between the relay station and the base station. As a result, it is possible to avoid that the channel whose quality is low is continuously used in an autonomous dispersed manner without waiting for signaling from the base station. In other words, in accordance with the present embodiment, while the overall optimum channel allocation is realized in accordance with the scheduling operation by the base station, the channel whose quality is good can be used without producing the control delay.

### (EMBODIMENT 2)

In the present embodiment, a deterioration of a channel quality is notified by utilizing an NACK (Negative Acknowledgement, namely, deny type response for confirming whether or not packet has been delivered). A relay station executes a CRC (Cyclic Redundancy Check) detection with respect to a packet transmitted from a mobile station to the relay station. When a result of the CRC detection as to the packet is "NG(No Good)", namely when the delivery of the packet could not be confirmed, the relay station transmits an NACK to the mobile station. The mobile station which has received the NACK transmits a resend packet by utilizing such a channel "CH" which has been allocated between the relay station and the base station.

If the above-described packet transmitting method is employed, then the mobile station can transmit the resend packet by utilizing the channel "CH" which is different from the channel "CH" used in the first packet transmission. As a result, there are two merits, namely, a frequency diversity effect can be achieved, and the more the CRC detection result becomes "NG", the more the channel "CH" whose quality has been deteriorated need not be continuously utilized.

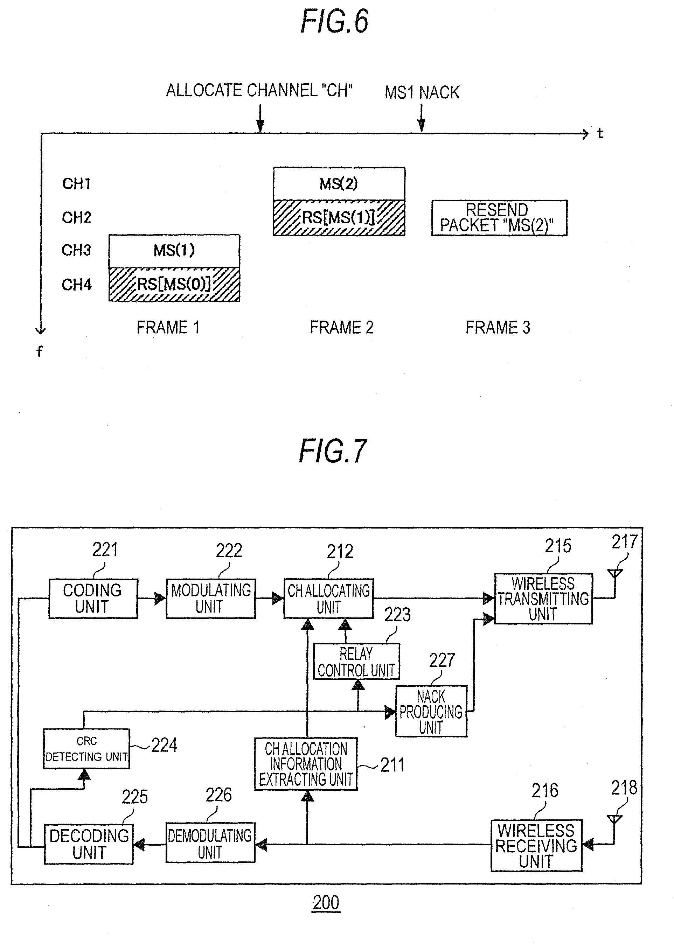

The technical idea of the present embodiment will now be explained with reference to Fig. 6 for showing a frame structure. Both a frame 1 and a frame 2 of the embodiment 2 are equal to the frames 1 and 2 of the embodiment 1. In the frame 2, a channel "CH1" has been allocated to a transmission established between the mobile station and the base station, and a channel "CH2" has been allocated between the relay station and the base station.

In the frame 2, a packet "MS(2)" transmitted by the mobile station becomes "CRC NG" in the relay station, and thus, an NACK is returned to the mobile station. The mobile station which has received the NACK transmits a resend packet by using the channel "CH2" which has been allocated between the relay station and the mobile station.

### [BLOCK DIAGRAM (2) OF RELAY STATION APPARATUS]

Fig. 7 is a block diagram for indicating a relay station 200 according to the present embodiment. An explanation as to commonly employed structural elements shown in Fig. 4 will be omitted in Fig. 7. In the present embodiment, such a technical point that the relay station 200 detects a CRC is different from that of the embodiment 1. A signal outputted from a wireless receiving unit 216 is demodulated by a demodulating unit 226; the demodulated signal is decoded by a decoding unit 225; and thereafter, the decoded signal is entered to both a coding unit 221 and a judging unit 224. In the coding unit 221, the relay signal is again coded, and then, the coded signal is again modulated by a modulating unit 222. The modulated signal is entered to a CH (channel) allocating unit 212.

The CRC detecting unit 224 judges whether or not an error is contained in the relay signal, and then, inputs the judgment result to both a relay control unit 223 and an NACK producing unit 227. When the CRC detection result is "NG", the relay control unit 223 instructs the CH allocating unit 212 in such a manner that the relaying operation is stopped. When the CRC detection result is "NG", the NACK producing unit 227 produces an NACK (Negative Acknowledgement) which should be transmitted to the mobile station 100, and then, inputs the produced NACK to the wireless transmitting unit 215.

### [BLOCK DIAGRAM (2) OF MOBILE STATION APPARATUS]

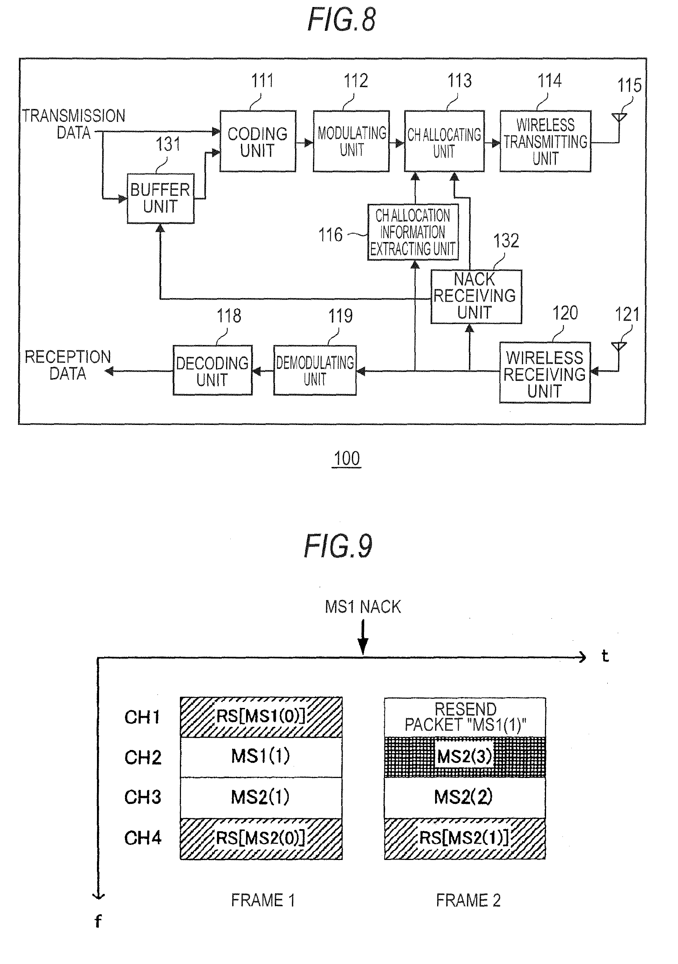

Fig. 8 is a block diagram for showing the mobile station according to the present embodiment. An explanation as to commonly employed structural elements shown in Fig. 4 and Fig. 7 will be omitted in Fig. 8. An NACK receiving unit 132 receives an NACK transmitted from the relay station 200. When the NACK is received, the NACK receiving unit 131 notifies such a fact that the NACK has been received to a buffer unit 131 and a CH allocating unit 113.

The transmission data is inputted to both a coding unit 111 and a buffer unit 131. The buffer unit 131 stores thereinto the transmission data. When such a fact that the NACK has been received is notified from the NACK receiving unit 132, the signal which has been stored in the buffer unit 131 is entered to the coding unit 111.

If the NACK notification is not received, then the CH allocating unit 113 allocates a channel "CH" in accordance with the CH allocation information. When the NACK notification is received, if the CH allocation information corresponds to the latest CH allocation information, then the CH allocating unit 113 performs the CH allocation in accordance with the latest CH allocation information, whereas if the CH allocation information does not correspond to the latest CH allocation information, then the CH allocating unit 113 allocates such a channel "CH" which has been allocated between the relay station 200 and the base station 300.

### (EXAMPLE WHERE ANOTHER "MS" USES EMPTY "CH" WHEN RESENDING OPERATION IS CARRIED OUT)

In the present embodiment, when a resending operation occurs between a mobile station and a relay station, such a channel "CH" is not used which has been allocated to a packet transmitted between the relay station and a base station. As a consequence, the present embodiment will propose such a technical idea that this empty channel "CH" is used by another MS. This proposed technical idea will now be described by employing a frame structural diagram (Fig. 9).

In this case, it is so assumed that a total number of mobile stations is 2. In a frame 1, a packet "MS1(1)" of a mobile station 1 has been allocated to the channel "CH2"; a packet "MS2(1)" of a mobile station 2 has been allocated to the channel "CH3"; a packet "RS[MS1(0)]" which relays a packet "MS1(0)" has been allocated to the channel "CH1"; and also, a packet "RS[MS2(0)]" which relays a packet "MS2(0)" has been allocated to the channel "CH4."

At this time, when an NACK is returned with respect to the packet "MS1(1)" of the mobile station 1 and a resending operation is required, a trade of channels "CHs" is carried out. Then, in a frame 2, the mobile station 1 transmits the resend packet "MS1(1)" via the channel "CH1" which has been allocated for the relaying operation. In this case, the mobile station 2 transmits a packet "MS2(3)" via the channel "CH2" which has been allocated to the mobile station 1 and has become an empty channel.

In this case, the reason why the mobile station 2 has been selected is given as follows: That is, the channel "CH3" which is located at the closest channel with respect to the channel "CH2" which becomes an empty "CH" has been allocated to the mobile station 2. Since the channel "CH2" is located adjacent to the channel "CH3", it is expectable that the qualities of these channels "CH2" and "CH3" are approximated to each other. As a consequence, there is a high possibility that the mobile station 2 to which the channel "CH3" has been allocated can transmit a packet via the channel "CH2" with maintaining the quality equivalent to that of the channel "CH3." This priority order is required in which the priority order has been previously and commonly used between packets "MSs." Alternatively, the priority order may be determined based upon QoS (Quality of Service) of a packet, and the like.

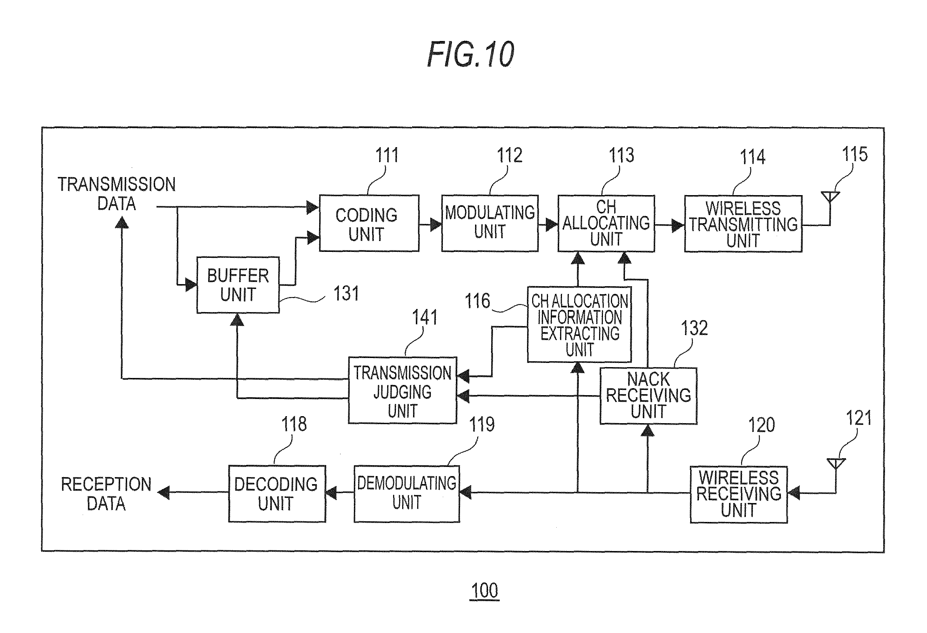

Fig. 10 shows a block diagram of the mobile station 2. An explanation as to commonly employed structural elements shown in Fig. 8 will be omitted in Fig. 19. An NACK receiving unit 132 receives an "NACK" transmitted from the relay station 200. When the NACK is received, the NACK receiving unit 132 notifies such a fact that the NACK has been received to both a transmission judging unit 141 and a CH allocating unit 113. A CH allocation information extracting unit 116 inputs extracted CH allocation information to both the CH allocating unit 113 and the transmission judging unit 141. If the NACK is directed to the own station, the transmission judging unit 141 notifies an instruction to the buffer unit 131 in such a manner that a signal is resent to the buffer unit 131. If the NACK is directed to another station, then the transmission judging unit 141 checks whether or not such a station which is using a channel "CH" corresponds to the own station based upon the CH allocation information, while the above-described channel "CH" is located at the closest channel with respect to another channel through which a signal of another station is scheduled to be relayed. If the station which is using the closest channel corresponds to the own station, the transmission judging unit 141 instructs that the transmission data is also transmitted via the channel "CH" through which the signal of another station is scheduled to be relayed in addition to the allocated channel "CH." Also, in such a case that there are plural sets of mobile stations which are using the clomost channel "CH" with respect to the channel "CH" through which the signal of another station is scheduled to be relayed, it is possible to previously determine such a schedule that a mobile station which is transmitting via a channel "CH" having a small CH number may transmit, or another mobile station which is transmitting via a channel "CH" having a large CH number may alternatively transmit.

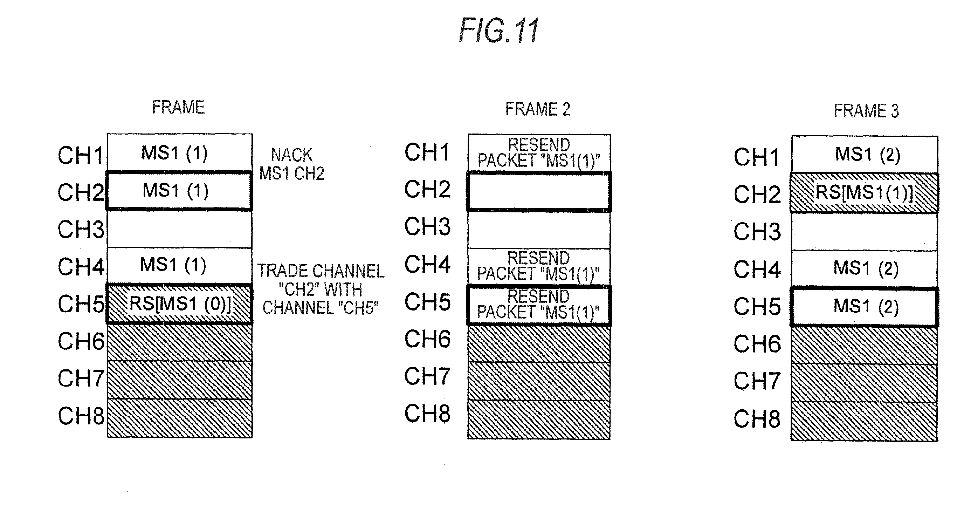

Fig. 11 shows an exemplification in such a case that a total number of channels between a mobile station and a relay station is different from a total number of channels between the relay station and a base station. In this case, the mobile station is transmitting 3-divided packets "1" in a frame 1 by utilizing 3 sets of channels "CH1", "CH2", and "CH4." When the relay station detects such a channel whose quality is deteriorated, the relay station notifies the channel whose quality is deteriorated (in this example, channel "CH2") in combination with an NACK to the mobile station. Then, in a frame 2, while the mobile station ceases to use the channel "CH2" whose quality is low, and uses the channel "CH5" which had been allocated between the relay station and the base station in the frame 1 so as to resend the 3-divided packets 1 via the channels "CH1", "CH4", and "CH5."

As previously described, in such a case that the mobile station "MS1" subdivides the packet 1 into the 3-subdivided packets 1 and transmits these 3-subdivided packets 1, since the mobile station "MS1" returns the NACK by adding thereto the information which specifies the channel whose quality is low, the channel whose quality is low can be traded in a higher efficiency between the mobile station and the relay station.

### (EXAMPLE IN WHICH PILOT SIGNAL IS TRANSMITTED TO A PART OF EMPTY CHANNEL)

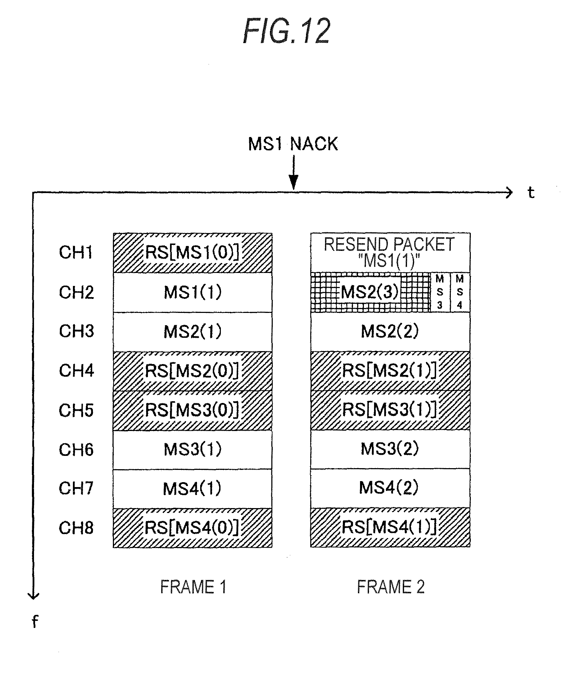

Moreover, another technical idea is proposed in which a pilot signal for measuring a line quality by a mobile station is transmitted to a part of empty channel. A description of this technical idea with reference to a frame structural diagram (Fig. 12).

It is so assumed that a total number of mobile stations is 4. It is also assumed that an "NACK" is returned to a packet "MS1(1)" of the mobile station 1 in a frame 1, so that a resending operation is required. In a frame 2, the mobile station 1 transmits a resend packet "MS1(1)" via a channel "CH1" allocated for a relay purpose. Since a channel "CH2" of the frame 2 becomes an empty channel "empty CH", a mobile station 2 which has used a channel "CH3" located at the closest channel with respect to the channel "CH2" transmits a packet "MS2(3)" to the channel "CH2" in a similar manner to Fig. 9.

In addition, the mobile station 1 which has been originally allocated to the channel "CH2", a mobile station 3, and a mobile station 4 transmit a pilot signal for predicting a line quality to the channel "CH2", while both the mobile station 3 and the mobile station 4 correspond to such mobile stations except for the mobile station 2 which transmits a packet. As previously described, if such a mobile station which has not transmitted the packet by using the channel "CH2" can measure the line quality of the channel "CH2", then it is possible to easily find out such a mobile station that the line quality of the channel "CH2" is high.

### (EMBODIMENT 3)

In the present embodiment 3, a relay station notifies a channel "CH" whose quality has been deteriorated to a mobile station. The mobile station uses such a channel "CH" which has been allocated between the relay station and a base station instead of the designated channel "CH." The relay station transmits a packet to the base station by using the channel "CH" whose quality has been deteriorated and which has been notified to the mobile station instead of the channel "CH" allocated between the relay station and the base station. In the present embodiment, when a plurality of channels "CHs" have been allocated, only such a channel whose quality has been deteriorated can be changed.

A description is made of the present embodiment with reference to a frame structural diagram (Fig. 13). In a frame 1, a mobile station 1 is transmitting packets "MS(5)", "MS(6)", "MS(7)", and "MS(8)" to a relay station by using channels "CH2", "CH3", "CH4", and "CH6." The relay station is transmitting a packet for relaying "MS1 (1)" and "MS1 (2)", and another packet for relaying "MS1(3)" and "MS1(4)" to a base station by using channels "CH1" and "CH5", respectively.

In this example, the reason why the relay station is relaying a plurality of packets by employing a single packet is given as follows: That is, the relay station has intensively collected relay signals. At this time, since qualities of the channels "CH2" and "CH3" are deteriorated, the relay station notifies such a message that the qualities of the channels "CH2" and "CH3" have been deteriorated to a mobile station. The mobile station which has received the notification changes the channels "CH2" and "CH3" into the channels "CH1" and "CH5" which have been allocated between the relay station and the mobile station.

### (EXAMPLE WHERE CHANNEL ALLOCATION IS CHANGED IN ORDER FROM SMALLER CHANNEL NUMBER)

In this embodiment, the channel allocation is changed in this order from a smaller channel number. In other words, such a packet which is scheduled to be transmitted to the channel "CH2" whose channel number is smaller than that of the channel "CH3" within the channels "CH2" and "CH3" is allocated to the channel "CH1" whose channel number is smaller than the channel "CH5" within the channels "CH1" and "CH5." Similarly, a packet which is scheduled to be the channel "CH3" is transmitted via the channel "CH5."

If the above-described channel allocation changing method is employed, then channels which are used by the mobile station within a frame 2 become four channels, namely, the channels "CH1", "CH4", "CH5", and "CH6." When the relay station notifies the deterioration of the quality to the mobile station, this relay station transmits to the base station by utilizing the channels "CH2" and "CH3" whose quality deteriorations have been notified to the base station in the frame 2.

### (EXAMPLE IN SUCH A CASE THAT TOTAL NUMBER OF CHANNELS "CHs" WHOSE QUALITIES HAVE BEEN DETERIORATED IS DIFFERENT FROM TOTAL NUMBER OF ALLOCATED CHANNELS "CHs")

A description is made of such a case that a total number of channels "CHs" whose quality deteriorations have been notified is different from a total number of channels "CHs" allocated between a relay station and a base station.

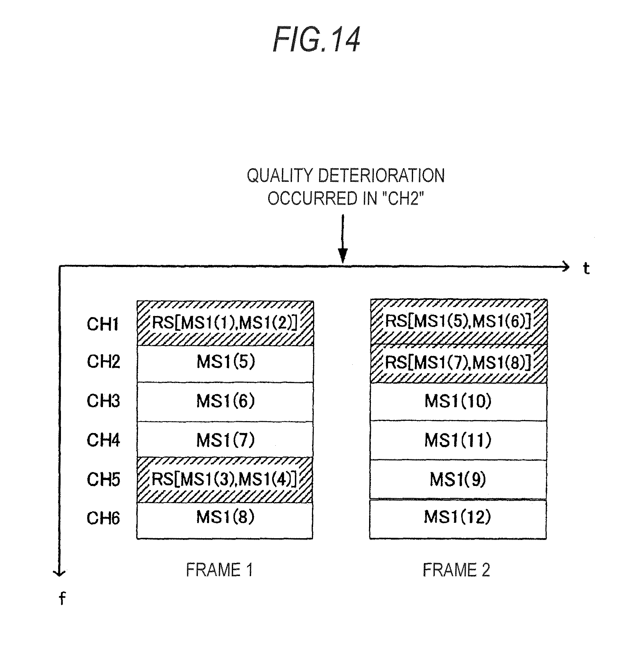

A description is made of the above-described case with reference to a frame structural diagram (Fig. 14). A frame 1 of Fig. 14 is similar to that of Fig. 13. The relay station notifies a deterioration of the channel "CH2" to a mobile station. When the mobile station receives such a notification that the channel "CH2" has been deteriorated, the mobile station selects such a channel "CH" whose distance from the channel "CH2" is long among the channels "CHs" which have been allocated between the relay station and the mobile station.

In this example, since the channel candidates are the channels "CH1" and "CH5", the mobile station allocates a packet to such a channel "CH5" whose distance from the channel "CH2" is long. If this channel allocation is employed, then such a channel "CH" can be used which is separated from the channel "CH" whose quality has been deteriorated. As a result, it is possible to expect that the line quality can be increased.

### (EMBODIMENT 4)

A technical idea according to an embodiment 4 of the present invention is proposed as follows: That is, in such a case that a channel "CH" which has been allocated between a mobile station and a relay station is traded with another channel "CH" which has been allocated between the relay station and a base station so as to use the traded channel "CH", a pilot signal for predicting a channel of another mobile station is transmitted by utilizing an empty channel. In the present embodiment, the empty channel can be effectively utilized, and furthermore, qualities of channels among a large number of mobile stations and the base station can be measured in a high efficiency without deteriorating throughput.

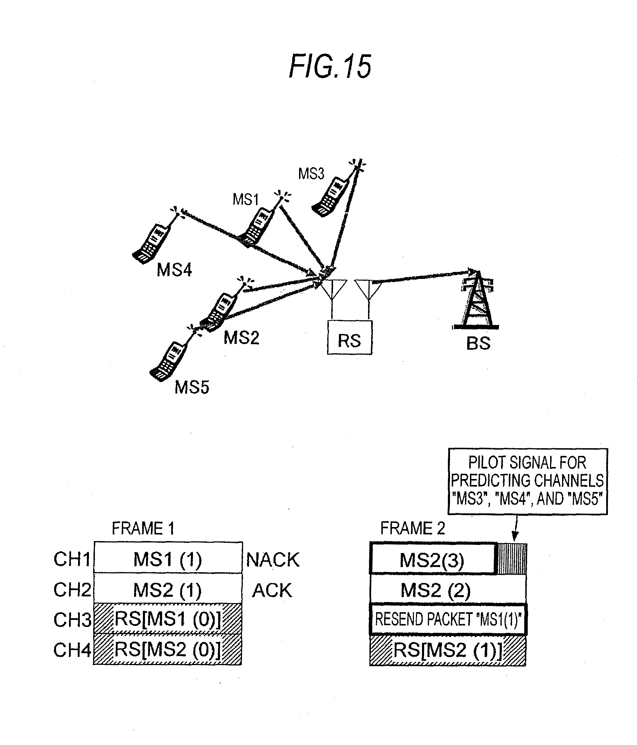

Fig. 15 represents an example where in such a case that a mobile station "MS1" receives an NACK from a relay station "RS" and another mobile station "MS2" receives an "ACK"(Acknowledgement: confirmation response) from a relay station "RS", a pilot signal for predicting a channel of another mobile station is transmitted through a channel which is scheduled to become empty due to CH (channel) trade.

In a frame 1, the mobile station "MS1" receives an NACK from the relay station "RS", and the mobile station "MS2" receives an ACK from the relay station "RS." In a frame 2, the mobile station "MS1" trades channels "CHs", and then, uses the channel "CH3" in order to resend a packet 1, which has been used by the relay station RS, so as to transmit to the base station BS. In the frame 2, the mobile station "MS2" transmits a packet 2 via the channel "CH2", and also, transmits a packet 3 via the channel "CH1" which has become an empty channel. At this time, the mobile station "MS2" transmits pilot signals for predicting channels of mobile stations "MS3", "MS4", and "MS5."

In accordance with the present embodiment, the pilot signals for other mobile stations ("MS3" to "MS5") can be transmitted by utilizing such a channel which is scheduled to become empty. As a result, qualities of other channels can be grasped, and the situations for indicating whether or not channels can be allocated to other mobile stations can be measured in a higher efficiency. As a consequence, there is an advantage in channel scheduling by the base station.

It should be understood that in the above-explained respective embodiments, the description has been made of such a case that the inventive idea of the present invention has been applied to the up-stream line. Alternatively, the inventive idea of the present invention may be embodied in a down-stream line. That is, a relay station may alternatively relay and transmit control signals such as channel allocation information and down-stream line data, which are transmitted from a base station, to a mobile station via a down-stream line channel in a similar manner to that of the above-explained example.

It should also be understood that the frames 1, 2, and 3 in the above-explained respective embodiments are not always frames which are not continued to each other. In other words, the frame 2 may correspond to such a frame subsequent to the frame 1, and the frame 3 may correspond to such a frame subsequent to the frame 2.

It should also be understood that the frames 1, 2, 3, and 4 in the above-explained respective embodiments are not always frames which are continued to each other.

It should also be understood that when the channel trade is carried out in the above-described respective embodiments, it is possible to alternatively define that a packet may be transmitted by decreasing previously set N-stage multiplexing from the MCS (Modulation and Coding scheme) before the channel trade.

In the above-described respective embodiments (except for embodiment 4), among the signals which have been allocated to the channel "CH" which should be traded, only the pilot signal may be alternatively transmitted via the traded channel "CH", and the data signals may be alternatively transmitted via the traded channel "CH" without trading the channel "CH." Moreover, only the pilot signal for measuring the line quality may be alternatively handled as a subject for the channel "CH" trade.

Also, in the above-described respective embodiments, another relay station may be furthermore and alternatively provided either between the relay station and the base station or between the mobile station and the relay station. Alternatively, the signal transmitted from the mobile station may be received by the base station via a plurality of relay stations.

Also, it should be understood that the base station and the mobile station as explained in each of the above-described embodiments may be alternatively expressed as a "Node B" and a "UE", respectively. Furthermore, the relay station as explained in each of the above-described embodiments may be alternatively referred to as a repeater, a simple base station, a cluster head, and the like.

Also, in the above-explained respective embodiments, such a case that the present invention is arranged by employing the hardware has been exemplified. Alternatively, the present invention may be realized by employing software.

Further, each of the functional blocks employed in the descriptions of the respective embodiments is typically realized as an LSI corresponding to an integrated circuit. Alternatively, these functional blocks may be individually realized as a 1-chip form, or a portion of these functional blocks may be realized as a 1-chip form, otherwise, all of these functional blocks may be manufactured in a single semiconductor chip. Although the respective functional blocks have been manufactured in the LSI form in this case, this LSI may be alternatively referred to as an IC, a system LSI, a super LSI, an ultra LSI, depending upon differences in integration degrees.
Also, the method for manufacturing these functional blocks in the integrated circuit form is not limited only to the LSI, but may be alternatively realized by employing an exclusively-designed circuit, or a general-purpose processor. Moreover, the method for manufacturing these functional blocks in the integrated circuit form may be alternatively realized by utilizing an FPGA (Field Programmable Gate Array) which can be programmed after the LSI has been manufactured, or a reconfigurable processor capable of reconstructing connections and setting conditions of circuit cells employed inside the LSI.
In addition, if such new integrated circuit manufacturing techniques capable of trading LSIs will be developed based upon advanced semiconductor techniques, or other techniques derived from the above-explained semiconductor techniques in future, then the functional blocks may be apparently manufactured in integrated circuits by utilizing the new integrated circuit manufacturing techniques. Possibly, biotechnology methods may be similarly adapted.

While the present invention has been described in detail, or with reference to the specific embodiments, it is apparent for an ordinarily skilled engineer that the present invention may be modified and changed in various manners without departing from the technical scope and spirit of the present invention.
The present patent application has been filed on the basis of claiming Japanese Patent Application (JP2006-292101) filed on October 27, 2006, the contents of which have been incorporated herewith as references.

### Industrial Applicability

The present invention has been suitably applied to such a communication system (for instance, multi-hop system) that a wireless communication system, for example, a mobile station, a base station, and the like performs a wireless communication operation via a relay station.

## Claims

1. A wireless communication apparatus for relaying a communication between a mobile station and a base station in accordance with a predetermined channel allocation rule, the wireless communication apparatus comprising:
a function for judging that a quality of a channel used between the mobile station and the wireless communication apparatus has been deteriorated; and
a function for notifying a deterioration of the quality of the channel to the mobile station, and for executing trade of a channel which has been allocated between the base station and the wireless communication apparatus with the channel which has been allocated between the mobile station and the wireless communication apparatus.

2. The wireless communication apparatus as claimed in claim 1, comprising:
a channel allocation information extracting unit which extracts channel allocation information transmitted from the base station;
a quality deterioration judging unit which judges a quality deterioration of a signal received from the mobile station;
a channel-trade instructing unit which outputs, when receiving a notification that the signal has been deteriorated from the quality deterioration judging unit, channel-trade instruction information of an instruction for trading the channel which is used in a communication between the mobile station and the wireless communication apparatus with the channel which is used in a communication between the base station and the wireless communication apparatus; and
a channel allocating unit which allocates the channels in accordance with the channel-trade instruction information.

3. The wireless communication apparatus as claimed in claim 2, wherein:
if the channel allocation information inputted from the channel allocation information extracting unit corresponds to the latest channel allocation information, then the channel allocating unit allocates the channels in accordance with the latest channel allocation information, whereas if the channel allocation information inputted from the channel allocation information extracting unit does not correspond to the latest channel allocation information, then the channel allocating unit allocates the channels in accordance with the channel-trade instruction information of the channel-trade instructing unit.

4. The wireless communication apparatus as claimed in claim 1, comprising:
a wireless transmitting unit which transmits a signal to the base station;
a CRC detecting unit which performs a CRC detection with respect to a signal transmitted from the mobile station;
an NACK producing unit which produces an NACK to be transmitted to the mobile station in such a case that a result of the CRC detection becomes NG, and inputs the produced NACK to the wireless transmitting unit; and
a channel allocating unit which allocates the channel which has been allocated between the mobile station and the wireless communication apparatus to the channel between the base station and the wireless communication apparatus in such a case that the result of the CRC detection becomes NG.

5. A wireless communication apparatus which communicates via a relay station with a base station in accordance with a predetermined channel allocation rule, the wireless communication apparatus comprising:
a function for performing a communication with the relay station by using a channel which has been allocated between the relay station and the base station in such a case that the wireless communication apparatus receives notification as to a quality deterioration of a channel from the relay station.

6. The wireless communication apparatus as claimed in claim 5, comprising:
a channel allocation information extracting unit which extracts channel allocation information transmitted from the relay station;
a channel-trade instruction receiving unit which receives channel-trade instruction information transmitted from the relay station; and
a channel allocating unit which allocates the channels in accordance with the channel-trade instruction information.

7. The wireless communication apparatus as claimed in claim 6, wherein:
if the channel allocation information inputted from the channel allocation information extracting unit corresponds to the latest channel allocation information, then the channel allocating unit allocates the channels in accordance with the latest channel allocation information, whereas if the channel allocation information inputted from the channel allocation information extracting unit does not correspond to the latest channel allocation information, then the channel allocating unit allocates the channels in accordance with the channel-trade instruction information received by the channel-trade instruction receiving unit.

8. The wireless communication apparatus as claimed in claim 5, comprising:
a function for transmitting a resend packet to the relay station by using the channel which has been allocated between the relay station and the base station in such a case that an NACK is received from the relay station.

9. The wireless communication apparatus as claimed in claim 8, comprising:
a channel allocation information extracting unit which extracts channel allocation information transmitted from the relay station;
a coding unit which codes transmission data;
an NACK receiving unit which receives the NACK transmitted from the relay station;
a buffer unit which stores thereinto the transmission data, and outputs the transmission data stored thereinto to the coding unit in such a case that a notification that the NACK has been received is issued from the NACK receiving unit; and
a channel allocating unit operated in such a manner that if the notification of the NACK is not issued from the NACK receiving unit, then the channel allocating unit allocates the channels in accordance with the channel allocation information; when the notification of the NACK is issued from the NACK receiving unit, if the channel allocation information corresponds to the latest channel allocation information, then the channel allocating unit allocates the channels in accordance with the channel allocation information; whereas if the channel allocation information does not correspond to the latest channel allocation information, then the channel allocating unit allocates the channel which has been allocated between the relay station and the base station to a channel between the relay station and the wireless communication apparatus.

10. The wireless communication apparatus as claimed in claim 5, wherein:
in such a case that a plurality of packets are transmitted via a plurality of channels contained in one frame, when the wireless communication apparatus receives notification as to a channel whose quality has been deteriorated from the relay station, the wireless communication apparatus changes channel allocation in such a manner that the wireless communication apparatus ceases to use a notified channel whose quality has been deteriorated among the channels which have been allocated between the relay station and the wireless communication apparatus, and then uses the channel which has been allocated between the relay station and the base station.

11. The wireless communication apparatus as claimed in claim 10, wherein:
a packet which is scheduled to be sent via a channel whose channel number is small among a plurality of designated channels is transmitted via a channel whose channel number is small among a plurality of channels which have been allocated between the relay station and the base station.

12. A wireless communication apparatus which communicates via a relay station with a base station in accordance with a predetermined channel allocation rule, the wireless communication apparatus comprising:
a function that, when another wireless communication apparatus senses that notification as to a deterioration of a channel quality has been received from the relay station, is communicated with the relay station via a channel which has been allocated between the another wireless communication apparatus and the relay station in addition to another channel which has been allocated between the wireless communication apparatus and the relay station.

13. The wireless communication apparatus as claimed in claim 12, comprising:
a channel allocation information extracting unit which extracts channel allocation information transmitted from the relay station;
an NACK receiving unit which receives an NACK transmitted from the relay station; and
a transmission judging unit operated in such a manner that when the received NACK is directed to another wireless communication apparatus, the transmission judging unit judges that the wireless communication apparatus corresponds to a wireless communication which is using the closest channel with respect to a channel which is scheduled to relay a signal from the another wireless communication apparatus based upon the channel allocation information, and
wherein transmission data is transmitted to the channel which is scheduled to relay the signal from the another wireless communication apparatus.

14. The wireless communication apparatus as claimed in claim 13, wherein:
in a case that there are plural sets of wireless communication apparatuses which are using the closest channel with respect to the channel which is scheduled to relay the signal from the another wireless communication apparatus, the transmission data is transmitted via the channel which is scheduled to relay the signal from the another wireless communication apparatus in accordance with a priority order which is commonly utilized among the plurality of wireless communication apparatuses.

15. The wireless communication apparatus as claimed in claim 14, wherein:
the priority order is determined based upon QoS of a packet transmitted in a preceding frame.

16. A wireless communication method in which transmitting operations and receiving operations are mutually carried out in a synchronous manner between a mobile station and a relay station and between the relay station and a base station, while a plurality of frames having a predetermined time length are defined as a unit; the base station performs scheduling of a plurality of channels within the frame; and both the mobile station and the relay station perform the transmitting operations and the receiving operations in accordance with the channel scheduling information notified from the base station; wherein:
in a first frame, when the relay station which communicates with the base station via a first channel senses a quality deterioration of a second channel which is used in the communication with the mobile station, the relay station notifies the quality deterioration of the second channel to the mobile station; and
in a second frame, the relay station communicates with the base station via the second channel, and the mobile station communicates with the relay station via the first channel.

17. The wireless communication method as claimed in claim 16, wherein:
in the second frame, if the scheduling information transmitted from the base station corresponds to the latest scheduling information, then both the relay station and the mobile station allocate channels in accordance with the received latest scheduling information.

18. The wireless communication method as claimed in claim 16, wherein:
in the first frame, if the relay station senses the quality deterioration of the second channel, then the relay station transmits an NACK to the mobile station.

19. The wireless communication method as claimed in claim 16, wherein:
in the second frame, the mobile station transmits a resend packet to the relay station by using the first channel.

20. The wireless communication method as claimed in claim 19, wherein:
in the second frame, another mobile station which is different from the mobile station communicates with the relay station via the second channel.
